# EUROPÄISCHE PATENTANMELDUNG

(11) **EP 1 933 514 A2**
(43) Veröffentlichungstag der Anmeldung: **18.06.2008**
(21) Anmeldenummer: 07020207.2
(22) Anmeldetag: 16.10.2007
(51) Int. Cl.: H04L 27/00

(54) **Verfahren zur Zweiseitenbandübertragung**

(30) Priorität: 16.10.2006 AT 17092006
(71) Anmelder: Sensordynamics AG, 8403 Graz-Lebring (AT)
(72) Erfinder: Schultes, Gerhard, Dr., 8141 Unterpremstätten (AT)

(57) **Zusammenfassung**

Bei einem Verfahren zur digitalen Datenübertragung über ein bestimmtes möglichst schmalbandiges Frequenzband mithilfe von Phasenmodulation eines seriellen Datenstromes, vorzugsweise in NRZ-(Non-Return-to-Zero) oder differentieller NRZI (Non-Return-to-Zero, Invert on Ones) Kodierung dient ein Datenstromteiler der Erzeugung zweier Sekundär-Datenströme aus einem Primärdatenstrom. Durch Modulation auf zwei Teilfrequenzbänder unterhalb und oberhalb der zugeordneten Zentralfrequenz entsteht ein kombiniertes Frequenzband mit einer fiktiven (nicht vorhandenen oder primär nur zur Modulation genutzten) Trägerfrequenz und einem unterem Seitenband und einem oberen Seitenband.

Die gebildete Frequenzlücke (Notch) bietet Vorteile gegenüber den gegenwärtigen Methoden bei nahezu gleichem Bandbreitebedarf wie bei bestehenden Verfahren.

Das Verfahren eliminiert die Nachteile der bestehenden Übertragungsverfahren ohne auf die entwickelten Basistechnologien vollständig verzichten zu müssen, dadurch kann eine Schaltungsintegration in monolithische Halbleiter mit äußerst geringen Qualitätskompromisse und ohne externe Komponenten erreicht werden, wodurch kleinste Übertragungsgeräte zu geringeren Produktionskosten erzielbar sind.

## Beschreibung

Die vorliegende Erfindung betrifft ein für Digitalen Datentransfer und gehört zum Technischen Gebiet der Digitalen Nachrichtentechnik.

### Stand der Technik

Moderne Datenübertragungsverfahren insbesondere in der Mobilfunktechnik verwenden digitale Modulationsverfahren unter guter Ausnutzung der verfügbaren Sendekanal-Bandbreiten. Ein häufiges Modulationsverfahren ist die Vierphasenmodulation durch Quadratur-phasenumtastung (QPSK Quadrature Phase Shift Keying) auch Vektormodulationsverfahren genannt, wobei gleichzeitig zwei Bit pro Symbol übertragen werden. Dieses bekannte Verfahren vergrößert die spektrale Effizienz durch doppelte Ausnutzung der zur Verfügung stehenden Bandbreite gegenüber 1bit-Kodierungen.

Für Digitale QPSK wird der serielle Datenstrom eines NRZ (Non-Return-to-Zero)-Signals oder eines differentiellen NRZ-Signals, beispielsweise NRZI (Non-Retum-to-Zero, Invert on Ones)-Signals mit einer Datenrate R₀ zunächst mit einem Demultiplexer auf zwei parallele Pfade aufgeteilt. Nun können je zwei Bits (Dibits) verarbeitet werden. Diesen Dibits wird die Funktion eines komplexen Symbols mit Real- und Imaginärteil zugeordnet. Als Träger werden zwei Signale, ein Sinus- und ein Kosinus-Signal derselben Frequenz f_{C} verwendet, was einem Phasen-Versatz von 90° entspricht. Das entstehende QPSK-Signal ist die Addition zweier Zweiphasenmodulationen (PSK-Signale). Somit erhält man eine Vektorkodierung, die durch Differentialkodierung der Phasenzustände noch optimiert wird, indem zum Beispiel die Dibits 00=0°, 01=90°, 10=180° und 11=270° Phasenlage zugeordnet bekommen. Eine andere Betrachtung von QPSK-Signalen ist die einer Quadratur-Amplituden-Modulation mit vier Zuständen. Die minimal benötigte Übertragungsbandbreite ist gleich der halben Datenrate, auch Nyquist-Bandbreite genannt.

Folglich können über eine Bandbreite W maximal 2 mal W Daten durch QPSK übertragen werden.

Die möglichen Empfänger zur Signalrückgewinnung sind Direktdetektions-empfänger oder Geradeaus-Empfänger (DD, Direct Detection Receiver), Überlagerungsempfänger, oder moderne Empfänger mit niedriger Zwischenfrequenz (Direct Conversion oder Zero IF-Receiver, Low IF-Receiver).

Nachteilig am Direktdetektions-Empfänger ist hohe erforderliche Bandpass-Filtergüte, der damit verbundene komplexe Aufbau, hoher Stromverbrauch und schlechte Senderselektion, mäßige Empfindlichkeit sowie schwierige bis kaum mögliche monolithische Integrierbarkeit.

Überlagerungsempfänger (Superhet) und Low IF-Receiver haben diese Nachteile nicht. Aber dafür ist die Unterdrückung der Spiegelfrequenz bei Bildung der Zwischenfrequenz durch vorgeschaltete Hochfrequenzfilter oder Maßnahmen auf Zwischenfrequenzebene wie Polyphasenfilter Waverarchitektur oder anderen Realisierungen der Hilberttransformation nur eingeschränkt möglich, wodurch die Verlässlichkeit reduziert wird. Dies gilt insbesondere für hohe Signalfrequenzen mit tiefen Zwischenfrequenzen aufgrund der engen Angrenzung von Spiegelfrequenzband und Nutzsignalband und der großen relativen Bandbreite des Zwischenfrequenzsignals. Der Aufwand für die Filterung wird durch die notwendige Verwendung mehrerer Mischstufen und Spiegelfrequenz-Filtern (Heterodyn-Konzept) groß. Auch hier ist eine monolithische Integration mit hinreichender Qualität des Empfängers ohne externe Filterkomponenten nicht realisierbar. Die Kosten der externen Komponenten (SAW-Filter; keramische Filter oder Quarzfilter) sind aufgrund der erforderlichen Güte (Filtersteilheiten) ein wichtiger Aspekt in der Konsumgüterindustrie.

Um direkt bei der Trägerfrequenz keine Information zu übertragen, welche im Basisband als nachteilige Gleichsignal-Schwankungen abgebildet werden, wird das NRZ-kodierte Signal durch Manchester-Kodierung möglichst gleichspannungsfrei gemacht. Der Preis dafür ist jedoch eine höhere Bandbreite.

Durch Miller-Kodierung wird ebenfalls ein QPSK Spektrum mit geringer in der Amplitude veränderlicher Trägersignal-Frequenzkomponente (DC-free-QPSK, gleichstromfreie Phasenmodulation) erzeugt. Dennoch bleiben Probleme bei AC-Abkoppelung des restlichen DC-Anteils nach Miller-Kodierung aufgrund von Verzerrungen und Signalqualitätsverschlechterung.

Alternativ wird durch Scrambling Methoden der DC-Wert über lange Strecken niedrig gehalten, die erforderliche AC Kopplung bewirkt Einschränkungen aufgrund der Zeitkostanten der Kopplung, welche nachteilig lange Einschwing-zeiten zur Folge haben.

Vorteilhaft ist an der DC- Modulationsform ohne Träger, dass Direktkonversions-Empfänger (DCR Direct Conversion Receiver) oder Remodulations-Empfänger zur Demodulation verwendet werden können. Diese Empfänger besitzen geringste Toleranzanforderungen und dadurch gute Eignung für die Integration in integrierte Schaltkreise. Die Modulation erfolgt direkt hinunter in das Basisband (Homodynkonzept) wodurch ein Signal ohne Informationsgehalt im Spektrum bei DC entsteht. Dieser auch Zero-ZF genannte Empfänger hat eine Zwischenfrequenz bei null Hertz. Die Bildung von Bandpass-Filtern im Basisband ist einfach. Zur Trennung der Seitenbänder werden jedoch Image-Rejection-Mixer (I/Q-Mischer) eingesetzt, welche negative und positive Frequenzanteile in Realteil und Imaginärteil eines komplexwertigen Signals formen. Hier liegen die Nachteile. Da der Lokaloszillator (local oscillator) exakt um 90 Grad verschoben werden muss, und beide Mischer für I und Q ausgeglichene Verstärkung haben müssen, um keine Vermischung der Seitenbänder zu bekommen. Das Hauptproblem ist die Frequenz des Lokaloszillators, dessen Frequenz gleich der Signalfrequenz ist und aufgrund der höheren Signalstärke rasch über parasitäre Pfade in den Empfangskanal (z.B. Antenne) findet. Aufgrund der Phasenverschiebung entsteht ein starkes DC-Signal, welches den nachfolgenden Verstärker in die Sättigung bringen kann. Auch der von den Verstärkern selbst erzeugte variable Gleichanteil stellt ein Problem dar. Als Abhilfe eine AC-Kopplung einzusetzen ist nur mit den oben angeführten DC-freien Signalen störungsfrei sinnvoll. Daneben hat die Dämpfung der Spiegelfrequenzen aufgrund der nichtidealen Eigenschaften des Mischers nur einen typischerweise unzureichend endlichen Wert. Auch das 1/f-Rauschen stellt ein Problem dar.

Low IF-Empfänger mischen daher nicht auf bis null herunter um diesen Nachteil zu kompensieren oder zumindest zu reduzieren. Aufgrund der nichtidealen Spiegelfrequenz-eliminierung wird die Nachbarkanal-Spiegelfrequenz zum Störsignal. Die Spiegelfrequenzunterdrückung erreicht heute im kostengünstigen Fall 20 bis 30 dB. Niederfrequente Störungen lassen sich nach der Zwischenfrequenz-Umsetzung durch ein einfaches Hochpassfilter (AC-Kopplung) unterdrücken. Zur Kanalselektion wird ein komplexes Bandpassfilter benötigt, das nur für positive Frequenzen einen Durchlassbereich aufweist.

### Aufgabe der Erfindung

Die Aufgabenstellung der vorliegenden Erfindung ist es, ein Übertragungs-Verfahren zu schaffen, welches die Nachteile der genannten Prinzipien nicht aufweist. Dabei soll die Bandbreite möglichst effizient genutzt werden. Die Signalqualität soll keine bis geringe Verschlechterungen durch die Übertragung erfahren. Auch stark belastete Bandpass-Kanäle (Rauschen, Interferenzen) sollen optimal nutzbar sein. Das Verfahren soll eine monolithische Integration von Sender und Empfänger ohne zusätzliche und Kosten verursachende externe Komponenten (z.B. Selektivkomponenten für Filter, Quarze, SAW-Filter) ermöglichen.

Die Wahrscheinlichkeit von Blockierungen soll durch möglichst hohe Schmalbandigkeit der Kanäle mit ausreichender Selektion vermieden werden. Das Verfahren soll an bestehende QPSK-Verfahren angelehnt sein, aber auch für alle anderen Formen der digitalen Übertragung unter Nutzung eines durch die Signalrate bestimmten Signalbandes arbeiten. So sollen auch Modulationsformen mit mehr Phasenzuständen (z.B. 8PSK, 16PSK, MSK) als Multiwinkelmodulation ebenso einsetzbar sein.

Erfindungsgemäß wird die Aufgabenstellung dadurch gelöst, dass ein zu übertragender serieller Datenstrom mit einer Datenrate R₀ mithilfe einer Datenteilvorrichtung in zwei Teildatenströme mit den Datenraten R₁ und R₂ getrennt wird oder bereits getrennt vorliegt, wobei die Summe der Teildatenraten gleich der Gesamtdatenrate ist. Dadurch wird im Zeitbereich die maximale Änderungsfrequenz der Teildatenströme gegenüber dem Gesamtdatenstrom reduziert. Die minimal erforderliche Bandbreite wird ebenfalls reduziert und ist die halbe Teildatenrate dieser Teildatenströme.

Durch das Verfahren wird jeder der Teildatenströme je einem Phasenmodulator zugeführt wird, wobei der eine Phasenmodulator eine andere Modulationsfrequenz als der zweite.
Alternativ kann jeder der Teildatenströme zunächst mithilfe mindestens eines Unterträgers f_{S} moduliert und infolge als Teil-Frequenzband eines Hauptträgers f_{C} moduliert werden, wobei ein Teilfrequenzband zu einem unteren (LSB) und das andere Teilfrequenzband zu einem oberen Seitenband (USB) bezüglich des Hauptträgers abgebildet wird. Schließlich werden diese Daten nach Summierung über einen Übertragunskanal gesendet.

Nimmt man Vierphasenmodulation so wird dort bereits der Datenstrom in zwei Pfade geteilt um sie durch komplexe Modulation in zwei zueinander orthogonale Phasen zu bringen. In diesem Fall ist es vorteilhaft, dass zur Zweiseitenbandübertragung ein zu übertragender serieller Datenstrom mit der Datenrate R₀ mittels einer Datenteilvorrichtung gleich in vier Teildatenströme mit den Datenraten R₁₁, R₁₂ und R₂₁, R₂₂ zu trennen, wobei die Summe dieser Datenraten gleich der Datenrate R₀ ist.
Diese Teildatenströme werden paarweise in QPSK-Signale moduliert, wobei ein Teildatenstrom jedes Paares mittels Sinus- und der zweite Teildatenstrom desselben Paares mittels Kosinussignal einer Unterträgerfrequenz zu einem QPSK-Signal moduliert werden. Dabei weisen die resultierenden beiden QPSK-Signale voneinander abweichende Modulationsfrequenzen auf mit f'₁=f_{C}-f_{S1} und f₂=f_{C}+f_{S2}.

Alternativ kann auch hier jeder der Teildatenströme zunächst mithilfe mindestens eines Unterträger f_{S} moduliert und infolge als Teil-Frequenzbänder eines Hauptträgers f_{C} moduliert werden, wobei ein Teilfrequenzband zu einem unteren (LSB) und das andere Teilfrequenzband zu einem oberen Seitenband (USB) bezüglich des Hauptträgers gebildet wird. Wieder erfolgt die Summenbildung und gemeinsame Übertragung der beiden Seitenbänder.

Vorteilhaft ist, dass der serielle Datenstrom ein NRZ-Signal, oder ein differentielles NRZ-Signal sein kann. Eine Differentialkodierung der Phasenzustände erleichtert die Demodulation weil keine Nullreferenz erforderlich ist. Kodierungsformen, wie Manchester- oder Millerkodierung für die Phasenzustandkodierung werden durch das Verfahren somit hinfällig.

Als Datenteilvorrichtung wird im einfachsten Fall ein Demultiplexer eingesetzt.

Die Datenteilvorrichtung kann den seriellen Datenstrom (11) in zwei parallele NRZ- Signale oder orthogonale -Signalpaare, in zwei parallele differentielle NRZ-Signale oder orthogonale - Signalpaare, oder Kombinationen aus NRZ und differentiellen NRZ-Signalen formen. Gleichanteile spielen keine nachteilige Rolle.

Die Teildatenströme weisen im einfachsten Fall die gleichen Datenraten auf wobei gilt: f_{S1}=f_{S2}=f_{S} und R₁=R₂=R₀/2 oder R₁₁=R₁₂=R₂₁=R₂₂=R₀/4. Dann sind die benötigten Seitenbänder gleich breit, die Ausnutzung der Bänder jedoch vom Signalinhalt der Teildatenströme abhängig.
Der Frequenzabstand der Modulations-Frequenzen oder der Frequenzabstand der Unterträger der Seitenbänder ist derart gewählt, dass ein spektraler Frequenzeinschnitt zwischen den Seitenbändern LSB und USB entsteht, wobei die Bandbreite B jedes Seitenbandes kleiner als dessen doppelte Unterträgerfrequenz ist.

Optimalerweise ist der minimale Frequenzabstand der Modulationsfrequenzen ein Viertel der Datenrate des Datenstromes ist R₁₁. Je größer der Abstand ist, desto größer ist der benötigte Gesamt-Bandbreitenbedarf.

Zur Demodulation werden einfache Seitenband-Empfänger Low-IF-Empfänger für das obere und das untere Seitenband oder Direktkonversions-Empfänger möglich. Danach müssen die Teildatenraten durch eine Datenzusammenführeinrichtung zum Ausgangs-datenstrom zusammengesetzt werden. Dies geschieht nach einer komplexen Demodulation oder getrennter Demodulation des oberen und des unteren Seitenbandes.

Als vorteilhaft bietet sich die Möglichkeit, dass die Teildatenströme durch die Datenteilvorrichtung verwürfelt werden, wobei die Pfade der Teildatenströme nach einer vordefiniertem oder im Dateninhalt eingebetteten Vorschrift verkreuzt werden und durch die Datenzusammenführeinrichtung wieder mithilfe des bekannten Dekodiermusters oder aus dem im dekodierten Datenstrom gebetteten Umschaltbefehl dekodiert werden. Dadurch wird erhöhte Abhörsicherheit erreicht aber auch in Abhängigkeit von der Kanalqualität des oberen und unteren Seitenbandes, der Frequenzgang veränderbar.

### Vorteile durch die Erfindung

Durch den Trick der Datenstromteilung (Stream-Splitting) wird auf einfache und elegante Weise, die komplexe Problematik der eingangs beschriebenen Nachteile aufgrund des Trägersignals und seiner Modulation umgangen, ohne auf die bestehenden Module der ausgereiften Signalempfangsstrukturen moderner Empfangs-Anlagen verzichten zu müssen, jedoch mit Vollintegrierbarkeit ohne externe Filterkomponenten bei optimaler und hinreichender Signalqualität und nahezu gleichem Bandbreitenbedarf. Der dadurch geschaffene virtuelle Träger, oder ein eventuell zur Seitenbandmodulation reeller Hauptträger ohne Informationsgehalt sind für die Demodulation völlig irrelevant und somit ohne störenden Einfluss, weder bei Direktkonversionsempfängern (Direkt Conversion Receivern) im Basisband, noch bei Low-IF Receivern.

Der Gegenstand der Erfindung wird anhand folgender Zeichnungen erläutert. Es zeigen
**Fig**.1 den Signalpfad einer Vorrichtung zur Durchführung des Verfahrens.
**Fig**.2 und **Fig**.3 zeigen zwei Beispiele von Verfahren nach dem Stand der Technik.
**Fig**.4 zeigt den Frequenzgang des Signalbandes eines Übertragungskanals gemäß dem Stand der Technik Verfahren wie in **Fig**.2 gezeigt.
**Fig**.5 zeigt den Frequenzgang durch das gegenständliche neue Verfahren.
**Fig**.6 skizziert einen Frequenzgang durch Millerkodierung und **Fig**.7 mithilfe von Manchesterkodierung.

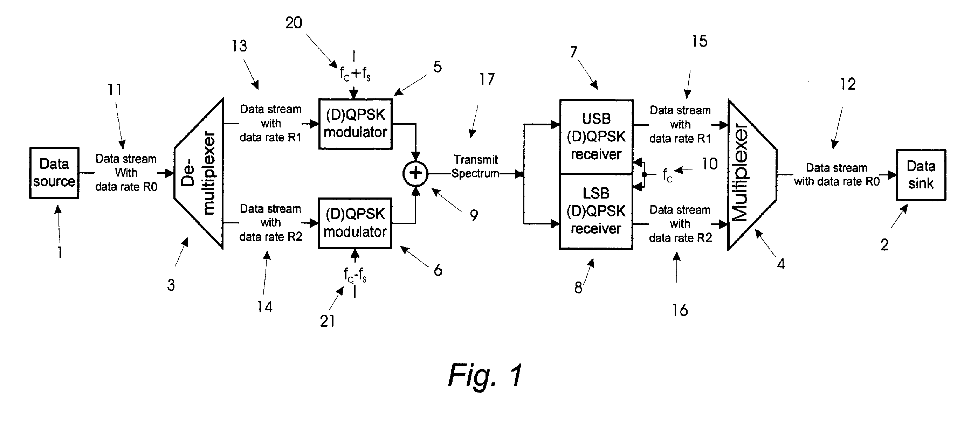

**Fig.**1 skizziert das Verfahren anhand eines anschaulichen Beispieles. Die Datenquelle 1 liefert einen zu übertragenen Datenstrom mit der Datenrate R₀. Diese Daten können über einen A/D Wandler gebildet sein, wobei die Verarbeitungsdaten Audio-, Video-, oder Sensordaten sein können. Auch andere digitale Steuer-, Kontroll- oder Computerdaten sind Quellen. Ist die verwendbare Bandbreite physikalisch bedingt oder durch Vorschriften eingeschränkt können über den Übertragungspfad 17 nur limitierte Datenraten übertragen werden. Die maximale Datenrate ist doppelt so groß wie die Bandbreite. Oder anders gesagt, der erforderliche Bandbreitenbedarf ist gleich der halben maximalen Datenrate. Wie bereits beschrieben wird nun der konstante Datenstrom 11 mit statistisch variabler Zustandsfolge der Datenteilvorrichtung 3 zugeführt. Diese Vorrichtung ist hier ein einfacher Demultiplexer, aber kann auch eine komplexere Schaltvorrichtung sein. Die Aufgabe der Datenteilvorrichtung 3 ist das synchrone Aufteilen des Signaldatenstromes 11 mit der Datenrate R₀ in zwei Teildatenströme 13 und 14 mit den Teildatenraten R₁ und R₂. Im einfachsten Fall sind diese beiden Datenraten gleich groß und halb so groß wie die Signaldatenrate R₀. Ein ungleiches Verhältnis bewirkt eine Verschiebung der Zentralfrequenz aus der Mitte und ist nur in Sonderfällen vorteilhaft. Einen Sonderfall stellt beispielsweise eine Kodierung des Signaldatenstromes dar, welche an jeder x. Stelle einen konstanten Zustand oder eine konstante Zustandsänderung hat, wodurch das Teilspektrum redundanzbefreit werden kann.

Allgemein wird jedoch eine symmetrische Verarbeitung angestrebt für die die Teildatenraten gleich groß sind. Damit ist R₁ = R₂ = R₀/ 2.

Jeder Teildatenstrom 13, 14 wird nun einer separaten Modulation zugeführt. Hier sind zwei digitale Quadratur-Phase-Shift-Keying-Modulatoren (QPSK) 5,6 eingesetzt. Diese Vierphasenmodulatoren setzen die Teildatenströme mittels den Modulationsfrequenzen 20 und 21 auf Unterdatenträger mit den Frequenzen f_{C}+f_{S} und f_{C}-f_{S},
wobei f_{C} als virtuelle Zentralfrequenz definiert ist und f_{S} den Unterträgerabstand dazu festlegt. Bei unsymmetrischer Verarbeitung mit ungleichen Datenraten ist f_{S} auch unterschiedlich für die beiden Verarbeitungen. Die Größe von f_{S} ist durch die erforderliche Bandbreite einerseits und durch die erwünschte Abstandsbreite zwischen dem oberen und unteren Seitenband definiert und etwas größer als die halbe erforderliche Bandbreite für die Teildatenströme. Nach der Umsetzung werden die Signale auf einem Kanal 17 durch die Addition 9 übertragen.

Eine zeitlich begrenzte Aufnahme des resultierenden Übertragungsspektrums 17 ist in **Fig.**5 ersichtlich. Dieses weist zwei Teilbänder LSB und USB auf, mit den Unterträgern f_{C}+f_{S} und f_{C}-f_{S} und dem für das gegenständliche Verfahren typischen Frequenzeinschnitt (notch) bei der virtuellen Zentralfrequenz f_{C}. Die Bandbreite W ist nur geringfügig breiter als für bestehende QPSK-Verfahren und hat kaum einen merkbaren Einfluss auf die Selektivität. Die "Stand der Technik- Methode" ist in **Fig**.2 dargestellt. Dabei wird der Signaldatenpfad direkt einer QPSK-Modulationsstufe oder Differentialkodierten QPSK zugeführt und hat dann das Übertragungsspektrum im Übertragungskanal 18 gemäß **Fig**. 4.

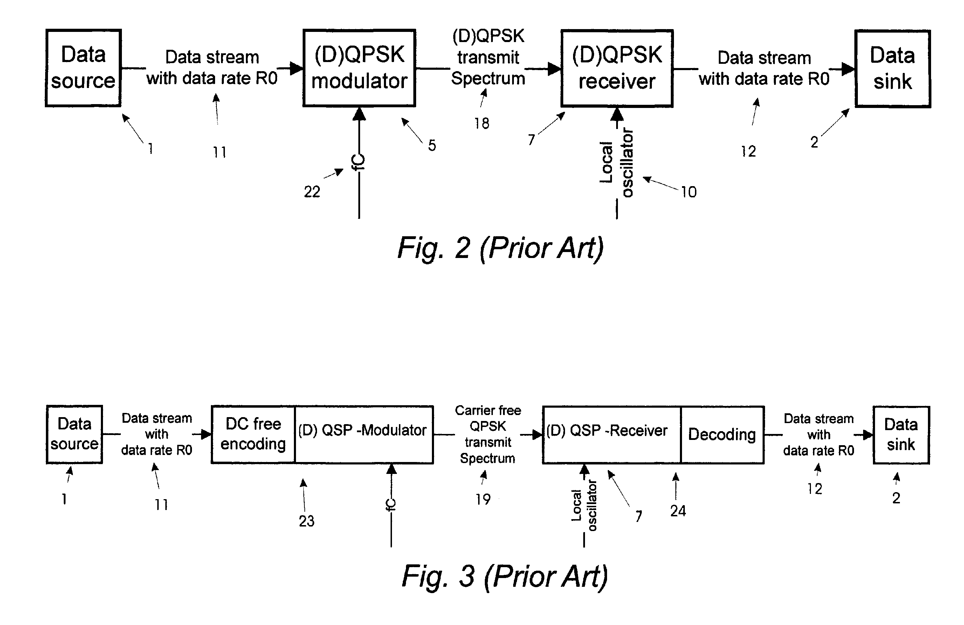

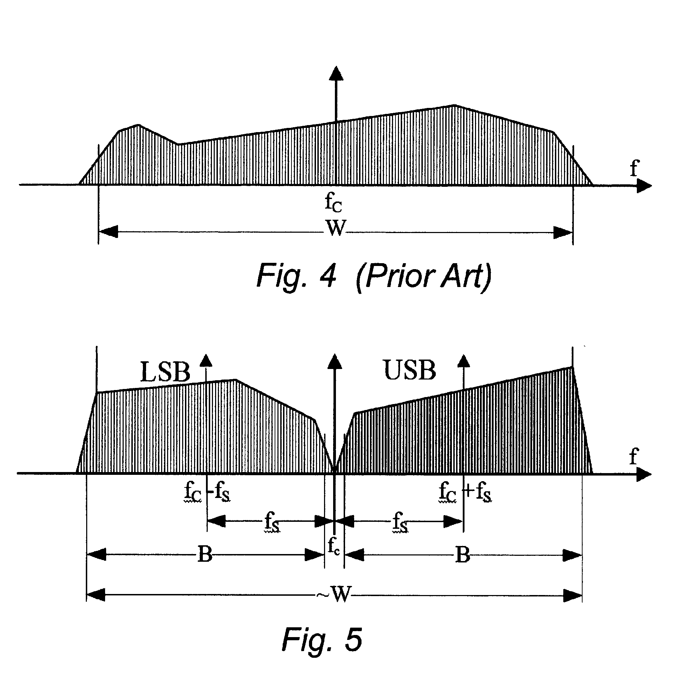

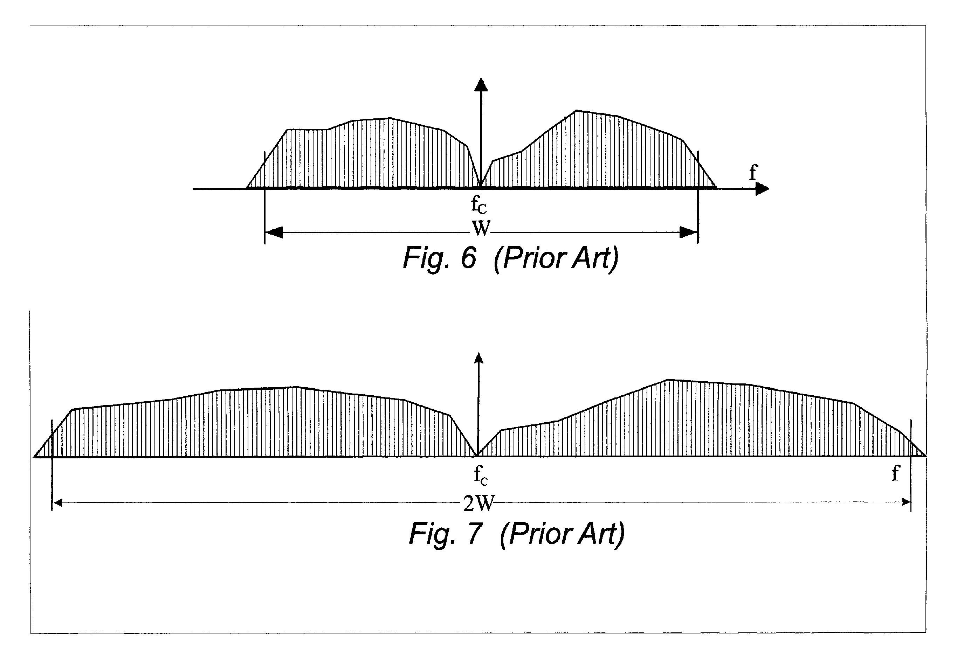

Der Unterschied zu Trägerfrequenz vermeidenden Verfahren ist sichtbar, wenn **Fig.**1 mit **Fig.**3 verglichen wird. Für die in **Fig**.3 gezeigte ebenfalls bekannte Methode kann das Spektrum 19 einen ähnlichen Verlauf, wie in **Fig**.6 erhalten, jedoch ist eine Restträgersignalunterdrückung immer noch erforderlich, da ein statistischer DC-Anteil im Zeitsignal nicht völlig beseitigbar ist. Hier wird für ein hinreichend großes Zeitfenster durch DC-freie Kodierung der QPSK mithilfe einer Millerkodierung der Signalinhalt möglichst Gleichanteil-frei gehalten.

In **Fig**.7 ist ersichtlich, dass die Befreiung des Gleichanteiles bei Verwendung von Manchesterkodierung gemäß **Fig**.3 der Bandbreitenbedarf verdoppelt wird.

Für die Demodulierung des Übertragungssignals 17 des gegenständlichen Verfahrens können verschieden Demodulatoren eingesetzt werden. In **Fig**.1 sind zwei Seitenbanddemodulatoren gezeigt, welche mit der Zentralfrequenz f_{c} des Lokaloszillators 10 demoduliert werden und direkt der Datenzusammenführeinrichtung 4 zur Bildung des ursprünglichen Datenstromes 12 zugeführt wird. Danach gelangt das Signal zur Datensenke für weitere Aufbereitung oder zur Auswertung.

In herkömmlichen Demodulatoren dient ein QPSK Empfänger mit dem abgestimmten Lokalen Oszillator 10 der Rückgewinnung des ursprünglichen
Datenstromes 12 wie in **Fig**.2 oder mithilfe eines Decoders im Receiver 24 aus den kodierten Daten.

### Bezugszeichenliste

- **1**: Datenquelle (Signalerzeuger, Informationsquelle)
- **2**: Datensenke
- **3**: Datenteilvorrichtung (Demultiplexer)
- **4**: Daten-Zusammenführeinrichtung (Multiplexer)
- **5**: Modulator auf ein erstes Frequenzband (hier: Digitaler Vierphasenmodulator)
- **6**: Modulator auf ein zweites Frequenzband (hier: Digitaler Vierphasenmodulator)
- **7**: Erster Empfangsdemodulator für das obere Seitenband (Upper Sideband Demodulator, hier: Vierphasendemodulator)
- **8**: Zweiter Empfangsdemodulator für das untere Seitenband (Lower Sideband Demodulator, hier: Vierphasendemodulator)
- **9**: Signalsummierung zur Übertragung über den gleichen Signalpfad
- **10**: Lokaloszillator am Empfänger mit der Zentralfrequenz
- **11**: Datenstrom mit der maximalen Datenrate R₀
- **12**: Empfangsdatenstrom nach der Übertragung
- **13**: Erster Teildatenstrom mit der Teildatenrate R₁ vor der Modulation
- **14**: Zweiter Teildatenstrom mit der Teildatenrate R₂ vor der Modulation
- **15**: Erster Teildatenstrom mit der Teildatenrate R₁ nach der Demodulation
- **16**: Zweiter Teildatenstrom mit der Teildatenrate R₂ vor der Demodulation
- **17**: Übertragungskanal mit Übertragungsspektrum ohne Zentral-Frequenzkomponente
- **18**: Übertragungskanal mit Übertragungsspektrum mit Träger-Frequenzkomponente
- **19**: Übertragungskanal mit Übertragungsspektrum mit unterdrücktem oder durch Signalbereitung vermiedener Träger-Frequenzkomponente
- **20**: Modulationsfrequenz 1 (Zentralfrequenz + Seitenträgerfrequenz)
- **21**: Modulationsfrequenz 2 (Zentralfrequenz + Seitenträgerfrequenz)
- **22**: f_{c}, Trägerfrequenz des Modulators
- **23**: Modulator mit Gleichanteil-freier Kodierung (Z.B Manchester- oder Miller-Kodierung
- **24**: Receiver mit Dekodiereinrichtung
- **f_{C}**: Hauptträgerfrequenz, Zentralfrequenz
- **f_{S}**: Unterträgerfrequenz
- **f_{C}+f_{S}**: obere Seitenbandmodulationsfrequenz
- **f_{C}-f_{S}**: untere Seitenbandmodulationsfrequenz
- **LSB**: unteres Seitenband (Lower SideBand)
- **USB**: oberes Seitenband (Upper SideBand)
- **R₁, R₂**: (maximale) Teildatenraten
- **R₀**: (maximale) Übertragungsdatenrate

## Patentansprüche

1. Verfahren zur Zweiseitenbandübertragung **dadurch gekennzeichnet, dass**
• ein serieller digitaler Datenstrom (11) mit der Datenrate R₀ mittels einer Datenteilvorrichtung (3) in zwei digitale Teildatenströme (13,14) mit den Datenraten R₁ und R₂ getrennt wird, wobei R₁+R₂=R₀ gilt, und
• jeder der Teildatenströme (13, 14) je einem Phasenmodulator (5, 6) zugeführt wird, wobei der eine Phasenmodulator (5) eine Modulationsfrequenz (20) aufweist, die größer oder gleich f_{c} + fₛ ist und der andere Phasenmodulator (6) eine Modulationsfrequenz (21) größer fₛ aufweist, die kleiner oder gleich f_{c} - fₛ ist, und fₛ einen Frequenzhub gegenüber einem virtuellem Träger f_{c} darstellt, der hinreichend gewählt ist, dass die entstehenden Teilfrequenzbänder (LSB, USB) der Teildatenströme oberhalb und unterhalb des virtuellen Trägers einander nicht überschneiden, und
• die so gewonnenen analogen modulierten Teil-Signale nach Summierung (9) über einen gemeinsamen Übertragungskanal (17) gesendet werden.

2. Verfahren zur Zweiseitenbandübemagung **dadurch gekennzeichnet, dass**
• ein serieller digitaler Datenstrom (11) mit der Datenrate R₀ mittels einer Datenteilvorrichtung (3) in **zwei** digitale Teildatenströme (13, 14) mit den Datenraten R₁ und R₂ getrennt wird, wobei R₁+R₂=R₀ gilt, und jeder der der digitalen Teildatenströme (13, 14) zunächst mithilfe eines Unterträgers f_{S} auf jeweils zwei Sub-Seitenbänder moduliert wird und infolge als Teil-Frequenzband eines realen Hauptträgers f_{C} mithilfe von Einseitenbandmodulation moduliert werden, wobei ein Teilfrequenzband zu einem unteren (LSB) und das andere Teilfrequenzband zu einem oberen Seitenband (USB) bezüglich des Hauptträgers f_{c} gebildet wird, und
• die so gewonnenen analogen modulierten Teil-Signale nach Summierung (9) über einen gemeinsamen Übertragungskanal (17) gesendet werden.

3. Verfahren zur Zweiseitenbandübertragung **dadurch gekennzeichnet, dass**
• ein zu übertragender serieller Datenstrom (11) mit der Datenrate R₀ mittels einer Datenteilvorrichtung in vier Teildatenströme mit den Datenraten R₁₁, R₁₂ und R_{21,} R₂₂ getrennt wird, wobei die Summe dieser Datenraten gleich der Datenrate R₀ ist, und
• die Teildatenströme paarweise in QPSK-Signale mit oder ohne Differentialkodierung moduliert werden, wobei ein Teildatenstrom R₁₁, R₂₁ jedes Paares mittels Sinus- und der zweite Teildatenstrom R₁₂ bzw. R₂₂ desselben Paares mittels Kosinussignal einer paarzugeordneten Modulationsfrequenz zu je einem QPSK-Signal moduliert werden, wobei die Modulationsfrequenz (20) des einen Paares R₁₁, R₁₂ größer als f_{S1} und kleiner oder gleich f_{C}-f_{S1} und die Modulationsfrequenz (21) des anderen Paares R₂₁, R₂₂ größer oder gleich f_{C}+f_{S2} ist, wodurch ein virtuelles Trägersignal f_{C} entsteht, mit einem oberen Seitenband USB dessen Bandbreite kleiner oder gleich 2 f_{S2} ist und einem untere Seitenband LSB, dessen Bandbreite kleiner als 2 f_{S1} ist und
• die so gewonnenen analogen modulierten Teil-Signale nach Summierung (9) über einen gemeinsamen Übertragungskanal (17) gesendet werden.

4. Verfahren zur Zweiseitenbandübertragung **dadurch gekennzeichnet, dass**
• ein zu übertragender serieller Datenstrom (11) mit der Datenrate R₀ mittels einer Datenteilvorrichtung in **vier** Teildatenströme mit den Datenraten R₁₁, R₁₂ und R₂₁, R₂₂ getrennt wird, wobei die Summe dieser Datenraten gleich der Datenrate R₀ ist, und
• die Teildatenströme paarweise in QPSK-Signale mit oder ohne Differentialkodierung moduliert werden, wobei ein Teildatenstrom R₁₁, R₂₁ jedes Paares mittels Sinus- und der zweite Teildatenstrom R₁₂ bzw. R₂₂ desselben Paares mittels Kosinussignal einer paarzugeordneten Modulationsfrequenz zu je einem QPSK-Signal moduliert werden, wobei je zwei der Teildatenströme jeweils zunächst mithilfe je zwei zueinander orthogonaler Unterträger sin(2πf_{S1}), und cos(2πf_{S1}) beziehungsweise sin(2πf_{S2}), und cos(2πf_{S2}) moduliert und infolge durch Einseitenbandmodulation als Teil-Frequenzband eines realen Hauptträgers f_{C} moduliert werden, wobei ein Teilfrequenzband zu einem unteren (LSB) und das andere Teilfrequenzband zu einem oberen Seitenband (USB) bezüglich des Hauptträgers gebildet wird, wobei die Bandbreite B jedes Seitenbandes kleiner als dessen doppelte Unterträgerfrequenz und
• die so gewonnenen analogen modulierten Teil-Signale nach Summierung (9) über einen gemeinsamen Übertragungskanal (17) gesendet werden.

5. Verfahren nach einem der Ansprüche 1 bis 4 **dadurch gekennzeichnet, dass** der serielle Datenstrom (11) ein NRZ-Signal, oder ein differentielles NRZ-Signal ist.

6. Verfahren nach einem der Ansprüche 1 bis 5 **dadurch gekennzeichnet, dass** als Daten-teilvorrichtung (3) ein Demultiplexer eingesetzt ist.

7. Verfahren nach einem der Ansprüche 1 bis 4 **dadurch gekennzeichnet, dass** die Datenteilvorrichtung den seriellen Datenstrom (11) in zwei parallele NRZ- Signale oder orthogonale
- Signalpaare, in zwei parallele differentielle NRZ-Signale oder orthogonale -Signalpaare, oder Kombinationen aus NRZ und differentiellen NRZ-Signalen formt.

8. Verfahren nach einem der Ansprüche 1 bis 7, **dadurch gekennzeichnet, dass** der Frequenz-abstand der Unterträger mindestens ein Viertel der Datenrate (=R₀/4) des seriellen Datenstromes ist.

9. Verfahren nach einem der Ansprüche 1 bis 8, **dadurch gekennzeichnet, dass** zur Demodulation einfache Seitenband-Empfänger (7,8) Low-IF-Empfänger für das obere (7) und das untere Seitenband (8) oder Direktkonversions-Empfänger vorgesehen sind, und die Teildatenraten durch eine Datenzusammenführeinrichtung (4) zum Ausgangsdatenstrom (12) zusammengesetzt werden.

10. Verfahren nach einem der Ansprüche 1 bis 8, **dadurch gekennzeichnet, dass** die Teildatenströme durch die Datenteilvorrichtung (3) verwürfelt werden, wobei die Teildatenstrompfade nach einer vordefiniertem oder im Dateninhalt eingebetteten Vorschrift verkreuzt werden und durch die Datenzusammenführeinrichtung (4) wieder mithilfe des bekannten Dekodiermusters oder aus dem im dekodierten Datenstrom gebetteten Umschaltbefehl dekodiert werden.
